# EUROPEAN PATENT APPLICATION

(11) **EP 2 632 056 A1**
(43) Date of publication of application: **28.08.2013**
(21) Application number: 11834049.6
(22) Date of filing: 19.10.2011
(51) Int. Cl.: H04B 5/02, G06K 17/00, H04B 1/59

(54) **SHORT-DISTANCE WIRELESS COMMUNICATION DEVICE**

(30) Priority: 19.10.2010 JP 2010234311
(71) Applicant: Panasonic Corporation, Osaka 571-8501 (JP)
(72) Inventor: OOTANI, Masao, Chuo-ku, Osaka 540-6207 (JP)
(74) Representative: Grünecker, Kinkeldey, Stockmair & Schwanhäusser
(86) International application number: PCT/JP2011/005860
(87) International publication number: WO 2012/053203

(57) **Abstract**

Provided is a contactless communication R/W device that has low power consumption and a wide communication area in contactless communication that performs delivery of electronic data with a contactless communication device. The contactless communication R/W device includes an antenna coil, a resonance frequency setting section which sets a resonance frequency, and a coupling degree detecting section which detects a coupling degree corresponding to the resonance frequency of a counterpart antenna coil. The contactless communication R/W device transmits, in a first period before the start of communication, a carrier wave at a first level, and detects the coupling degree while changing the resonance frequency, and then, in a second period, the antenna coil transmits a carrier wave at a second level that is larger than the first level.

## Description

### Technical Field

The present invention relates to a short-distance wireless communication device such as a contactless card which performs contactless communication by using electromagnetic induction or a terminal device which is provided with a contactless card function, or a short-distance wireless communication device such as a contactless communication R/W device which is provided with a contactless communication function of delivering electronic data to the above short-distance wireless communication device.

### Background Art

In recent years, there is an increasing demand for developing a communication system which performs communication by approaching to contact with or adhere to a communication counterpart. In particular, there is an increasing demand for a communication system which performs communication by using an electric field or a magnetic field in a neighboring area within approximately 10 cm where the electric field or the magnetic field acts. Such a communication system is used in a variety of applications including a computerized account settlement service using a contactless card and a contactless communication R/W device. Because the most suitable resonance frequencies are different from each other to support to read out a plurality of contactless cards at the same time and to ensure a wide communication area under the influence of the unevenness of the contactless cards, the communication area of the contactless communication R/W device that performs communication using a resonance frequency fixed to a specified frequency gets narrow. Therefore, a short-distance wireless communication device is considered which has a resonance circuit which varies the resonance frequency, and is provided with a contactless communication function which performs communication by setting a resonance frequency which is suitable for a counterpart contactless card (for example, refer to a Patent Literature 1).

### Citation List

### Patent Literature

Patent Literature 1: JP-A-2000-172792

### Summary of Invention

### Technical Problem

However, in the short-distance wireless communication device which performs such a contactless communication, the resonance frequency suitable for the counterpart contactless card which performs communication is not known beforehand. Therefore, it is necessary to perform communication by changing the resonance frequency, determine the level of a reception signal in this case, select the most suitable resonance frequency, and set the selected resonance frequency to perform communication. Therefore, there are problems that it takes time to set the resonance frequency suitable for communication by performing communication multiple times, and the electricity that is necessary for detecting operations increases.

An object of the invention is to provide a short-distance wireless communication device which is provided with a contactless communication function which has a wide communication area by selecting a resonance frequency suitable for communication early, and also detecting with low power consumption to set the resonance frequency.

### Solution to Problem

A short-distance wireless communication device according to the present invention includes an antenna coil, a coupling degree detecting section which detects a coupling degree of the antenna coil corresponding to a frequency, and a resonance frequency setting section which sets a resonance frequency of the antenna coil. The short-distance wireless communication device performs a communication by using a carrier wave of a predetermined frequency with a different antenna coil which is opposed to the antenna coil. In a first period, the antenna coil transmits a carrier wave at a first level, and also the coupling degree detecting section detects a frequency for which the coupling degree is higher than a predetermined coupling degree, and sets the detected frequency as the resonance frequency in the resonance frequency setting section, and then, in a second period, the antenna coil transmits the carrier wave at a second level that is larger than the first level.

Furthermore, in the second period, the short-distance wireless communication device performs data communication using the carrier wave with another contactless card which is provided with the different antenna coil or a short-distance wireless communication device which is built with a contactless card function.
By using such a configuration, the short-distance wireless communication device can perform contactless communication in a wide communication area since the data communication is performed by means of electromagnetic induction when the coupling degree between the antenna coil and the other counterpart short-distance wireless communication device is large. Furthermore, a signal level when the coupling degree is detected is assumed to be smaller than the signal level when the data communication is performed so that the power consumption can be made lower.

In the short-distance wireless communication device according to the present invention, when a level of the carrier wave is smaller than a third level in the first period, the coupling degree detecting section determines that the coupling degree is higher than the predetermined coupling degree, and the third level is smaller than the first level.

By using such a configuration, the coupling degree determining part can determine that the coupling degree is high when the carrier wave is smaller than the third level, and contactless communication can be performed in a wide communication area since the data communication is performed by means of electromagnetic induction when the coupling degree between the short-distance wireless communication device and the other counterpart short-distance wireless communication device is large.

In the short-distance wireless communication device according to the present invention, when the level of the carrier wave is larger than the third level in the first period, the short-distance wireless communication device does not perform the data communication.

By using such a configuration, since data communication is not performed when the coupling degree between the short-distance wireless communication device and the other counterpart short-distance wireless communication device is small, electricity is not consumed uselessly and the consumed electricity can be lowered.

The short-distance wireless communication device according to the present invention includes a display part, and the display part displays that there is not a contactless card or a short-distance wireless communication device which is provided with a contactless card function in a communication area when the level of the carrier wave is larger than the third level in the first period.

By using such a configuration, a person who operates the short-distance wireless communication device can confirm that there is not a contactless card or a short-distance wireless communication device which is provided with a contactless card function in the communicable area.

The short-distance wireless communication device according to the present invention may determine as the frequency for which the coupling degree is higher than the predetermined coupling degree, the resonance frequency being a frequency for which the level of the carrier wave is smaller than the third level and for which the level of the carrier wave is the smallest among levels of carrier waves corresponding to the plurality of resonance frequencies.
By using such a configuration, the frequency for which the coupling degree is highest can be found among the resonance frequencies that can be set, and contactless communication can be performed in a wide communication area since the data communication is performed by means of electromagnetic induction when the coupling degree between the antenna coil and the other counterpart short-distance wireless communication device is large.

### Advantageous Effects of Invention

According to the present invention, the coupling degree of an antenna coil with a plurality of short-distance wireless communication devices provided with different resonance frequencies can be detected with low power consumption, and a short-distance wireless communication device can be provided which can perform communication in a wide area by using a set frequency for which the coupling degree is high.

### Brief Description of Drawings

Fig. 1 is a block diagram of a contactless communication R/W device according to an embodiment 1 of the invention.
Fig. 2 is a block diagram of a contactless communication R/W device according to an embodiment 2 of the invention.
Fig. 3 is a timing chart which shows a transmission signal and a reception signal.
Fig. 4 is a control flow chart of coupling degree detecting operations.
Fig. 5 is a timing chart which shows a transmission signal and a reception signal in a first period in the coupling degree detecting operations.

### Modes for Carrying out Invention

Next, embodiments of the invention are described in detail with reference to the figures.

### (Embodiment 1)

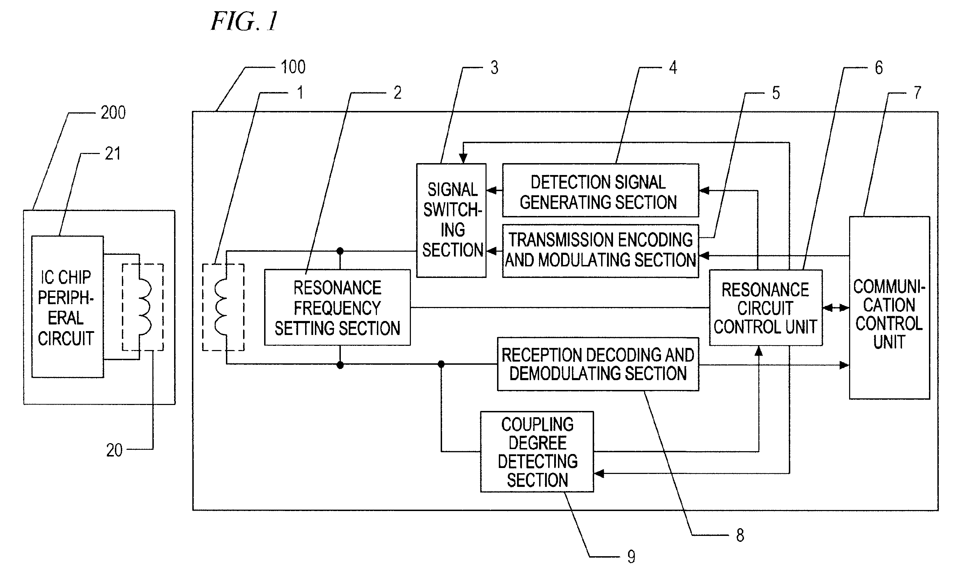

Fig. 1 is a block diagram of a contactless communication R/W device according to the embodiment 1 of the invention.

A contactless communication R/W device 100 includes an antenna coil 1 for electromagnetic induction communication, a resonance frequency setting section 2 which is connected between two ends of the antenna coil 1 and sets a resonance frequency by changing the resonance frequency, a resonance circuit control unit 6 which controls the resonance frequency setting section 2, a detection signal generating section 4 which generates and transmits a carrier signal in a first period, a coupling degree detecting section 9 which detects an antenna coupling degree corresponding to a frequency with a counterpart contactless communication device 200 from a reception signal from the antenna coil 1, a transmission encoding and modulating section 5 which generates a signal when communication is performed, a reception decoding and demodulating section 8 which processes the reception signal, and a communication control unit 7 which performs communication and circuit control in the contactless communication R/W device 100. The resonance frequency setting section 2 is configured so that switches are arranged in parallel to the terminal of the antenna coil 1 at the signal transmitting side, one ends of capacitors whose capacities are different or the same are connected to the other ends of the switches, and the other ends of the capacitors are connected to the other terminal of the antenna coil 1 at the signal receiving side, in order to adjust a resonance frequency by mean of the parallel resonance of the antenna coil 1 and LC.

A contactless communication device 200 includes an antenna coil 20 for electromagnetic induction communication, and an IC chip peripheral circuit 21 which forms a resonance circuit with the antenna coil 20, transmits and receives data, and stores data therein.

The contactless communication described herein is the communication which uses signals of a carrier wave frequency of 13.56MHz in an electromagnetic induction system. One or more of a plurality of systems such as ISO/IEC14443 Type A, Type B, FeliCa (registered trademark of Sony Corporation), and the tag communication of ISO/IEC15693 are suitable for the communication system.

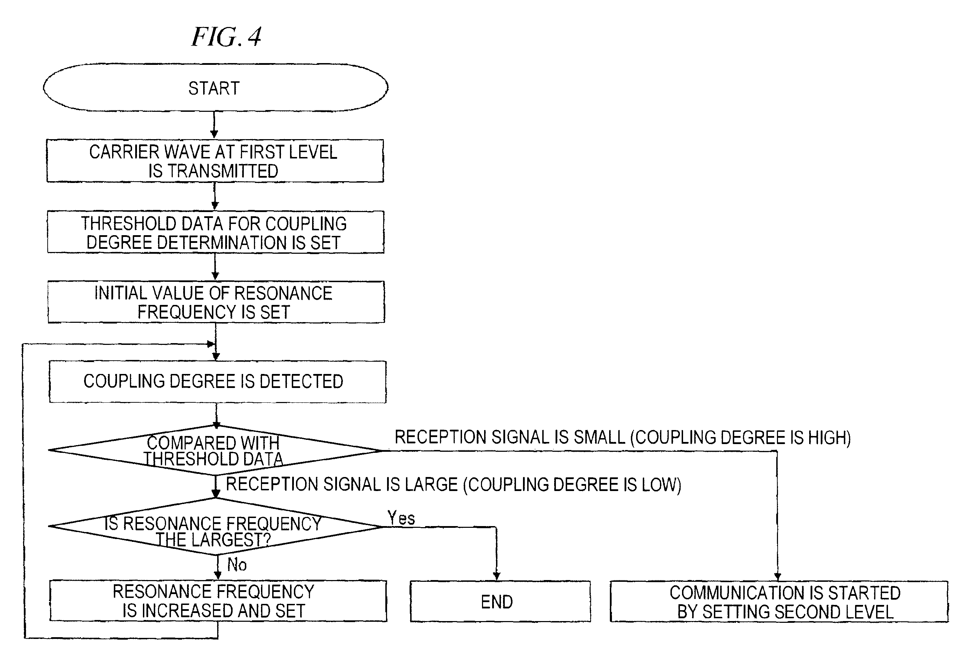

Fig. 4 is a control flow chart of coupling degree detection operations in which the coupling degree detection of the contactless communication R/W device 100 is performed until communication is started.

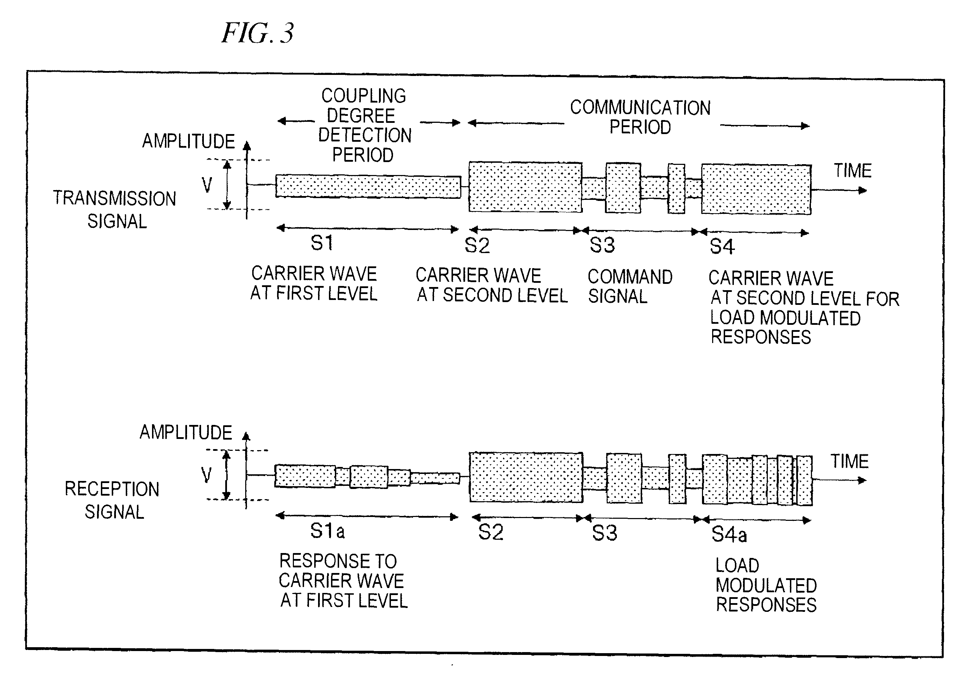

Fig. 3 is a timing chart which shows a transmission signal and a reception signal. S1 shows a carrier wave at a first level which the contactless communication R/W device 100 transmits to detect a counterpart contactless communication device 200. S2 shows a carrier wave at a second level that is larger than the first level for communication. S3 shows a command signal which is transmitted to the counterpart contactless communications device 200. S4 shows a carrier wave at the second level for load modulated responses to which the counterpart contactless communication device 200 responses to generate response signals. S1a shows responses to the carrier wave at the first level that are received by the contactless communication R/W device 100 as coupling degrees between the antennas when there is a counterpart contactless communication device 200. S4a shows load modulated responses that are received by the contactless communication R/W device 100 when the counterpart contactless communication device 200 responses.

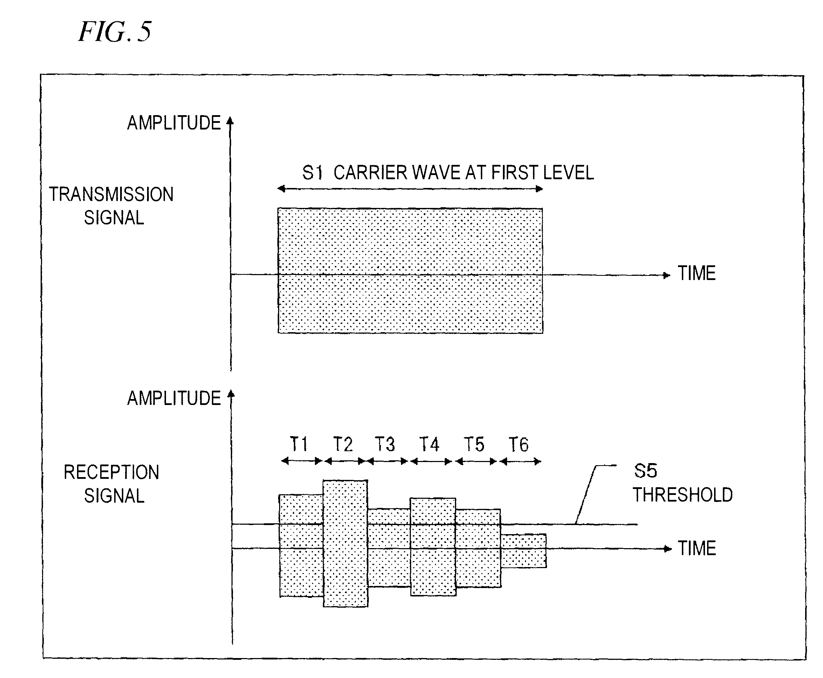

Fig. 5 is a timing chart which shows a transmission signal and a reception signal in the first period in the coupling degree detecting operations. S5 shows a threshold level that is set in the coupling degree detecting section 9 to determine the coupling degree. T1 to T6 show signals of a response S1a to the carrier wave at the first level when the setting of the resonance frequency setting section 2 is changed in six phases when the carrier wave at the first level is transmitted.

A series of operations when the contactless communication in the embodiment 1 is performed are described using Figs. 3, 4 and 5.

When the coupling degree detecting operations are started by the communication control unit 7, the detection signal generating section 4 generates a carrier wave at the first level under the control of the resonance circuit control unit 6, and the signal switching section 3 switches so that the signal of the detection signal generating section 4 is selected, and the carrier wave S1 at the first level is transmitted to one terminal (terminal for transmitting signals) of the antenna coil 1. Then, the resonance circuit control unit 6 sets the third level (a threshold S5) that is threshold data for coupling degree determination for the coupling degree detecting section 9. The threshold S5 is a value that is smaller than the first level. Then, the resonance circuit control unit 6 sets the smallest resonance frequency as the initial value of the resonance frequency for the resonance frequency setting section 2. Then, a signal from the other terminal (terminal for receiving signals) of the antenna coil 1 is detected by the coupling degree detecting section 9. When the antenna coil 20 of the counterpart contactless communication device 200 and the antenna coil 1 of the contactless communication R/W device 100 has a big coupling degree by means of electromagnetic induction of a 13.56MHz waveband, the signal from the antenna coil 1 becomes low, and when the coupling degree is small, the signal from the antenna coil 1 becomes high. After the coupling degree detecting section 9 compares the signal with the threshold S5 which is threshold data for coupling degree determination, if the signal is smaller than the threshold S5, the resonance circuit control unit 6 switches the signal switching section 3 to select a signal of the transmission encoding and modulating section 5, finishes the coupling degree detecting operations, and starts communication by transmitting a carrier wave at the second level that is larger than the first level from the antenna coil in the second period. After the coupling degree detecting section 9 compares the signal with the threshold S5 which is threshold data for coupling degree determination, if the signal is larger than the threshold S5, the resonance circuit control unit 6 determines whether the set frequency of the resonance frequency setting section 2 is the largest. If the set frequency is not the largest, the resonance circuit control unit 6 sets the next larger resonance frequency for the resonance frequency setting section 2, and the coupling degree detecting section 9 detects the coupling degree like the above. When a signal that is smaller than the threshold data for coupling degree determination cannot be detected until the largest frequency is set in the resonance frequency setting section 2, the operations are finished without starting communication.

The coupling degree detecting operations are described using Fig. 5 which is a timing chart which shows a transmission signal and a reception signal in the first period. For the carrier wave S1 at the first level transmitted by the detection signal generating section 4, when the smallest resonance frequency is set as the initial value in the resonance frequency setting section 2, since the reception signal which is input into the coupling degree detecting section 9 in T1 is larger than the threshold S5, the setting of the resonance frequency setting section 2 is changed. Since the reception signal in T2 is larger than the threshold S5, the setting of the resonance frequency setting section 2 is changed like the above. Since the reception signal in T6 becomes smaller than the threshold S5, the resonance frequency in this state is chosen, and communication is started by transmitting a carrier wave at the second level. It is an example to set the smallest resonance frequency as the initial value in the resonance frequency setting section 2 and to set to increase the resonance frequency one by one. As long as the resonance frequency for which the coupling degree is large can be detected, the setting of the initial value and the order of changing are not particularly prescribed. The coupling degree detecting section 9 may use a resonance frequency as the frequency for which the coupling degree is higher than the predetermined coupling degree, the resonance frequency being a frequency for which the levels of the carrier wave are smaller than the threshold S5 and for which the level of the carrier wave is the smallest among levels of carrier waves corresponding to a plurality of resonance frequencies.

Thus, according to the present embodiment, by detecting the resonance frequency for which the coupling degree between the contactless communication R/W device 100 and the counterpart contactless communication device 200 is large without performing communication, the resonance frequency can be detected early with low power consumption, and communication can be performed in a wide communication area.

### (Embodiment 2)

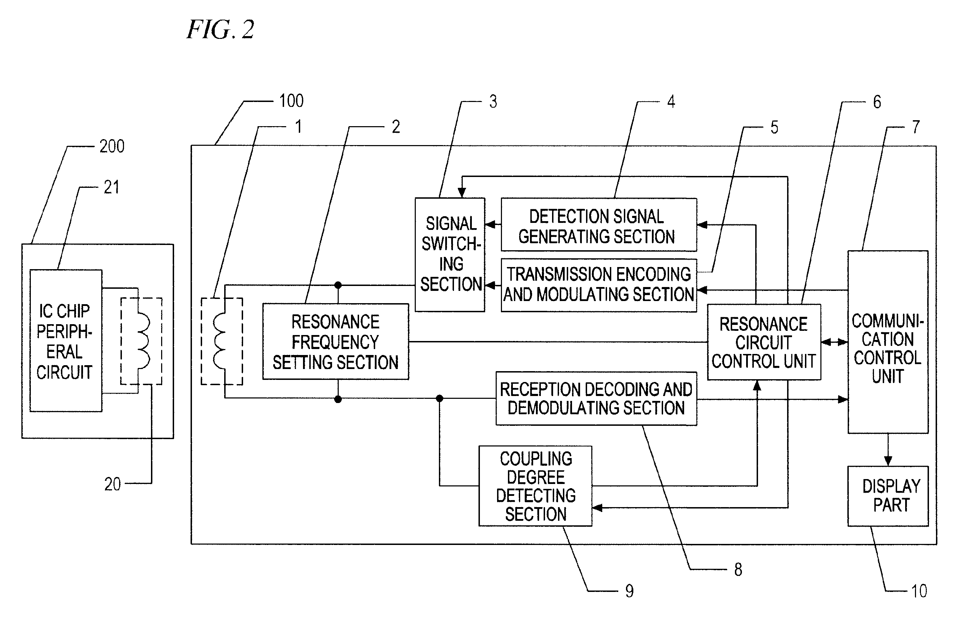

Fig. 2 is a block diagram of a contactless communication R/W device according to the embodiment 2 of the invention.

A contactless communication R/W device 101 is configured by adding to the contactless communication R/W device 100 a display part 10, which displays determination by determining the coupling degree with the counterpart contactless communication device 200 which is detected by the coupling degree detecting section 9, and determining that communication is possible when the signal is smaller than the threshold S5, and that communication is not possible when the signal is larger than the threshold S5. The display part 10 shows that there is not a contactless card or a short-distance wireless communication device that has a contactless card function in the communication area of the contactless communication R/W device 101 when the level of the carrier wave is larger than the threshold S5 in the first period.

Thus, according to the present embodiment, since the display part 10 displays that communication cannot be performed when the coupling degree of the contactless communication R/W device 101 with the counterpart contactless communication device 200 is small, an operator of the contactless communication R/W device 101 can understand that communication cannot be performed, and useless power consumption due to transmission of signals can be reduced. Further, the operator of the contactless communication R/W device 101 can provides an operation support to change from an incommunicable state to a communicable state by displaying to cause the counterpart communicate contactless communication device 200 to move to a communicable position.

Although the present invention has been described with reference to the above embodiments 1 and 2, the invention should not be limited to these embodiments. Various embodiments may be implemented without deviating from the spirit of the invention.

The present application is based upon the Japanese patent application (No. 2010-234311) filed on October 19, 2010, the contents of which are incorporated herein by reference.

### Industrial Applicability

The short-distance wireless communication device of the present invention is suitable to perform short-distance wireless communication, which delivers electronic data in a contactless way, with a contactless card that uses electromagnetic induction or a short-distance wireless communication device which is provided with a contactless card function.

### Reference Signs List

1, 20: antenna coil
2: resonance frequency setting section
3: signal switching section
4: detection signal generating section
5: transmission encoding and modulating section
6: resonance circuit control unit
7: communication control unit
8: reception decoding and demodulating section
9: coupling degree detecting section
10: display part
21: IC chip peripheral circuit
100, 101: contactless communication R/W device
200: contactless communication device
S1: carrier wave at a first level
S1a: response to the carrier wave at the first level
S2: carrier wave at a second level
S3: command signal
S4: carrier wave at the second level for load modulated responses
S5: threshold
S4a: load modulated responses
T1: reception signal for the first level when a resonant frequency 1 is set
T2: reception signal for the first level when a resonant frequency 2 is set
T3: reception signal for the first level when a resonant frequency 3 is set
T4: reception signal for the first level when a resonant frequency 4 is set
T5: reception signal for the first level when a resonant frequency 5 is set
T6: reception signal for the first level when a resonant frequency 6 is set

## Claims

1. A short-distance wireless communication device, comprising:
an antenna coil;
a coupling degree detecting section which is configured to detect a coupling degree of the antenna coil corresponding to a frequency; and
a resonance frequency setting section which is configured to set a resonance frequency of the antenna coil, wherein
the short-distance wireless communication device is configured to perform a communication using a carrier wave of a predetermined frequency with a different antenna coil which is opposed to the antenna coil,
in a first period, the antenna coil transmits a carrier wave at a first level, and also the coupling degree detecting section detects a frequency for which the coupling degree is higher than a predetermined coupling degree, and sets the detected frequency as the resonance frequency for the resonance frequency setting section, and
in a second period, the antenna coil transmits the carrier wave at a second level that is larger than the first level.

2. The short-distance wireless communication device according to claim 1, wherein
in the second period, the short-distance wireless communication device performs data communication using the carrier wave with another short-distance wireless communication device which is provided with the different antenna coil.

3. The short-distance wireless communication device according to claim 1 or claim 2, wherein
when a level of the carrier wave is smaller than a third level in the first period, the coupling degree detecting section determines that the coupling degree is higher than the predetermined coupling degree, and
the third level is smaller than the first level.

4. The short-distance wireless communication device according to claim 3, wherein
when the level of the carrier wave is larger than the third level in the first period, the short-distance wireless communication device does not perform the data communication.

5. The short-distance wireless communication device according to claim 4, further comprising
a display part, wherein
the display part displays that there is not a contactless card or a short-distance wireless communication device which is provided with a contactless card function in a communication area when the level of the carrier wave is larger than the third level in the first period.

6. The short-distance wireless communication device according to any one of claims 3 to 5, wherein
the resonance frequency setting section sets a plurality of resonance frequencies in the first period, and
the coupling degree detecting section determines a resonance frequency as the frequency for which the coupling degree is higher than the predetermined coupling degree, the resonance frequency being a frequency for which the level of the carrier wave is smaller than the third level and for which the level of the carrier wave is the smallest among levels of carrier waves corresponding to the plurality of resonance frequencies.
